# EUROPÄISCHE PATENTSCHRIFT

(11) **EP 0 817 715 B1**
(45) Veröffentlichungstag und Bekanntmachung des Hinweises auf die Patenterteilung: **14.06.2000**
(21) Anmeldenummer: 96904095.5
(22) Anmeldetag: 02.03.1996
(51) Int. Cl.: B29C 47/20

(54) **VERFAHREN UND VORRICHTUNG ZUM STRANGPRESSEN VON KUNSTSTOFFSCHMELZEN ZU HOHLKAMMERPROFILEN**
PROCESS AND DEVICE FOR EXTRUDING PLASTIC MELTS TO FORM HOLLOW BODIES
PROCEDE ET DISPOSITIF D'EXTRUSION DE MATIERES PLASTIQUES EN FUSION POUR L'OBTENTION DE CORPS CREUX

(30) Priorität: 25.03.1995 DE 19510944
(43) Veröffentlichungstag der Anmeldung: 14.01.1998
(73) Patentinhaber: Ensinger, Wilfried, D-71154 Nufringen (DE)
(72) Erfinder: Ensinger, Wilfried, D-71154 Nufringen (DE)
(74) Vertreter: Griessbach, Dieter, Dr. Dipl.-Phys.
(86) Internationale Anmeldenummer: EP9600884
(87) Internationale Veröffentlichungsnummer: WO9630188

(56) Entgegenhaltungen:
- EP-A- 0 275 162
- FR-A- 2 287 322
- US-A- 3 182 108
- US-A- 3 212 135
- US-A- 3 668 288
- US-A- 3 792 951
- PATENT ABSTRACTS OF JAPAN vol. 004, no. 128 (M-031), 9.September 1980 & JP,A,55 087535 (SHOWA DENKO KK), 2.Juli 1980,

## Beschreibung

Die Erfindung betrifft ein Verfahren zum Strangpressen von Kunststoffschmelzen zu Hohlkammerprofilen unter Hindurchpressen der Kunststoffschmelze durch ein beheiztes Profilwerkzeug mit innerem Profildorn, wobei Profilwerkzeug und Profildorn die Außen- und Innenkonturen des Hohlkammerprofils bestimmen, und unter anschließender Kalibrierung und Abkühlung des aus dem Profilwerkzeug austretenden Hohlkammerprofilstranges in einer Kalibrier- und Kühleinheit. Ferner betrifft die Erfindung eine Vorrichtung zur Durchführung eines solchen Verfahrens mit einem Profilwerkzeug, das einen inneren Profildorn enthält, und mit einer Kalibrier- und Kühleinheit.

Wirtschaftliche Aspekte gebieten es sehr häufig, anstelle von Vollprofilen, Hohlkammerprofile herzustellen, weil hierdurch Material eingespart und mit höherer Produktionsgeschwindigkeit gearbeitet werden kann. Jedoch werden bei Hohlkammerprofilen erhöhte Anforderungen an Maß-, Form- und Funktionsgenauigkeit gestellt, die nicht immer leicht zu erfüllen sind. Bei bekannten Verfahren und Vorrichtungen zum Strangpressen von Kunststoffschmelzen zur Hohlkammerprofilen (Michaeli "Extrusionswerkzeuge für Kunststoffe", 1991, insbesondere S. 194 bis 197) müssen unter anderem insbesondere folgende einschränkende Bedingungen erfüllt sein: Der Profilquerschnitt soll so einfach wie möglich gehalten werden, wobei Innenstege tunlichst zu vermeiden sind. Die Wanddicke von Innenstegen sollte um 20 bis 30% kleiner als die Wanddicke der Außenwand gewählt werden. Das Profil sollte so gestaltet sein, daß es auch im plastischen Zustand nach Austritt aus dem Werkzeug kurzzeitig seine Form behält. Materialanhäufungen und Wanddickensprünge sind zu vermeiden, da hierdurch die Beherrschung der Schmelzflußverteilung im Werkzeug schwierig wird, und Probleme bei der Kühlung entstehen (Einfallstellen aufgrund unterschiedlicher Schwindung und Verzug des Profils). Die Hohlräume im Hohlkammerprofil sollten nicht zu klein sein, da sonst die die Schmelze verdrängenden Körper (Dorne) zu klein werden und nicht ausreichend geführt werden können. Schließlich soll die Profilachse in der Schnekkenachse des verwendeten Extruders liegen, um Fließwegunterschiede möglichst klein zu halten.

Zur Herstellung der bekannten Hohlkammerprofile bedient man sich sogenannter Monoextrusionswerkzeuge, denen als separate Einheiten Kalibrier- und Abkühleinrichtungen räumlich getrennt nachgeschaltet sind, wobei man zur Kalibrierung häufig Vakuum benutzt. Durch die räumliche Trennung von Profilwerkzeug einerseits und Kalibrier- und Kühleinheit andererseits gelangt die profilierte Schmelze drucklos in die letztgenannte Einheit und wird dort drucklos und unter Vakuum ausgeformt und abgekühlt. Im Zwischenraum zwischen Profilwerkzeug und Kalibrier- und Abkühleinheit, wo naturgemäß Umgebungstemperatur und Atmosphärendruck herrschen, kommt es in der Regel zu einem Aufschwellen des stranggepreßten, aus dem Profilwerkzeug austretenden Hohlkammerprofils, das möglichst klein sein soll, um es in einfacher Weise in der Kalibrier- und Kühleinheit wieder ausgleichen zu können.

Alle diese Einschränkungen und Bedingungen führen dazu, daß bisher nur relativ einfache Hohlkammerprofile hergestellt werden konnten, während bei Hohlkammerprofilen mit komplizierten Querschnittsformen die Anforderungen an Genauigkeit und Maßhaltigkeit nur schwer zu erfüllen waren.

Ein Verfahren gemäß dem Oberbegriff des Patentanspruchs 1 ist aus DE-24 34 381A1 bekannt. Diese Druckschrift betrifft die Herstellung eines Hohlkammerprofils mit in sich geschlossenen Zellen, also ohne axial durchgehende Hohlkammern. Die Abkühlung erfolgt offensichtlich nicht bei Strangpreßdruck, sondern bei Atmosphärendruck.

Aus US-A-31 82 108 ist ein Verfahren zum Strangpressen von Rohren aus Kunststoffen mit nur einer einzigen Hohlkammer bekannt, wobei in einer Kalibrier- und Kühleinheit entweder an der Aussen- oder Innenseite des extrudierten Rohres eine, z.B. durch Öffnungen, porös gemachte Wand anliegt, durch welche hindurch eine Entgasung des Extrudats erfolgt. Wegen des für die Entgasung erforderlichen Druckunterschiedes kann dort das Extrudat in der Kalibrier- und Kühleinheit nicht unter Preßdruck stehen.

Aus US-A-51 32 062 ist es bekannt, ein geschäumtes Kunststoffmaterial zu einfachen Hohlprofilen zu extrudieren, beispielsweise zu Rohren ohne axial verlaufende Innenstege. Ein Kunststoffmaterial kann bekanntlich unter Strangpreßdruck nicht schäumen. Für eine Schäumung ist es vielmehr erforderlich, den Druck soweit zu entspannen, daß sich der Schaum in den dafür zur Verfügung stehenden Profilhohlräumen ausbilden kann. Deshalb zeigt auch die US-51 32 062, da dort ausschließlich geschäumtes Kunststoffmaterial verwendet wird, keine Kalibrierung und Kühlung eines Hohlprofilstranges unter Strangpreßdruck. Mit dieser bekannten Vorrichtung lassen sich nur einfache Profilquerschnitte, beispielsweise Rohre, herstellen.

Der Erfindung liegt die Aufgabe zugrunde, ein gattungsgemäßes Verfahren und eine gattungsgemäße Vorrichtung so auszubilden, daß auch sehr komplexe, unsymmetrische Hohlprofilquerschnitte, deren Profilachse auch außerhalb der Schneckenachse eines verwendeten Extruders liegen kann, und deren Außenwände und Innenstege unterschiedliche Maße und Formen, scharfe Kanten, Hinterschneidungen und Dickensprünge aufweisen können, mit höchster Präzision, d.h. ohne Einfallstellen und Vakuolen, hergestellt werden können.

Die Aufgabe wird bei einem erfindungsgemäßen Verfahren dadurch gelöst, daß ein Hohlkammerprofil mit axial durchgehenden Hohlkammern stranggepreßt und die Kalibrierung und Abkühlung des Hohlkammerprofilstranges in der Kalibrier- und Kühleinheit unter Preßdruck vorgenommen wird.

Vorzugsweise wird das Hohlkammerprofil mit unterschiedlichen Außenwand- und Innenstegdicken stranggepreßt.

Eine Vorrichtung zur Durchführung dieses Verfahrens zeichnet sich gemäß der Erfindung dadurch aus, daß das den Profildorn enthaltende Profilwerkzeug mit der Kalibrier- und Kühleinheit zu einem geschlossenen System fest verbunden ist, so daß der im Profilwerkzeug herrschende Strangpreßdruck sich in die Kalibrier- und Kühleinheit hinein fortpflanzt, und daß der Profildorn des Profilwerkzeuges in die Kalibrier- und Kühleinheit hineinragt.

Die nachstehende Beschreibung bevorzugter Ausführungsformen der Erfindung dient im Zusammenhang mit beiliegender Zeichnung der weiteren Erläuterung. Es zeigen:
- Fig. 1: eine schematisierte Schnittansicht einer herkömmlichen Vorrichtung zum Strangpressen von Kunststoff-Hohlkammerprofilen;
- Fig. 2: eine Schnittansicht entlang der Linie 2-2 in Figur 1;
- Fig. 2a: eine schaubildliche Teilansicht eines Hohlkammerprofils, hergestellt mit der Vorrichtung gemäß Fig. 1 und 2;
- Fig. 3: schematisch eine Schnittansicht einer erfindungsgemäßen Vorrichtung zum Strangpressen von Kunststoff-Hohlkammerprofilen;
- Fig. 4: eine Schnittansicht entlang der Linie 4-4 in Fig. 3;
- Fig. 4a: eine schaubildliche Teilansicht eines Hohlkammerprofils, hergestellt mit der Vorrichtung gemäß Fig. 3 und 4;
- Fig. 5: eine abgewandelte Vorrichtung, ähnlich Fig. 3, mit mehrteiligem Profildorn;
- Fig. 6: eine andere Ausführungsform einer Vorrichtung ähnlich Fig. 3 mit temperiertem Profildorn;
- Fig. 7: eine Schnittansicht entlang der Linie 7-7 in Fig. 6;
- Fig. 8: eine schematische Schnittansicht eines modifizierten Profildorns mit unterschiedlich langen Fingern;
- Fig. 9: eine Vorrichtung ähnlich Fig. 3 mit der Möglichkeit, zusätzlichen Kunststoff in das gebildete Hohlkammerprofil einzubringen;
- Fig. 10: eine Schnittansicht entlang der Linie 10-10 in Fig. 9;
- Fig. 11: eine gegenüber Fig. 3 wiederum abgewandelte Vorrichtung mit der Möglichkeit, eine Zusatzkomponente in den oder die Hohlräume des Hohlkammerprofils einzubringen;
- Fig. 12: eine Schnittansicht entlang der Linie 12-12 in Fig. 11 und
- Fig. 13: eine weitere Abwandlung der Vorrichtung gemäß Fig. 3.

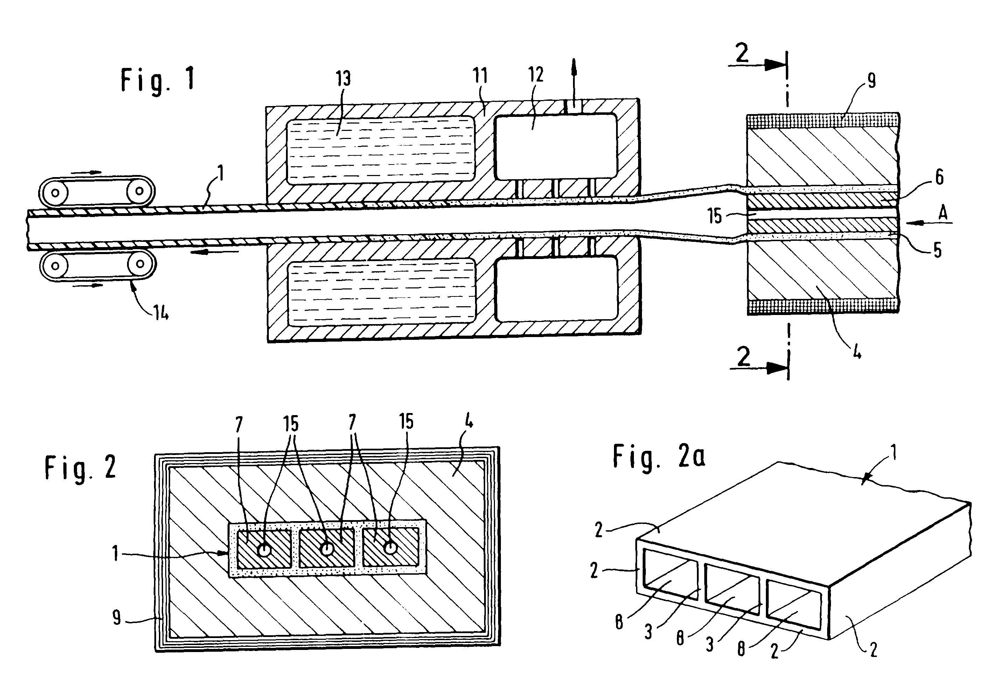

In Fig. 1 und 2 ist schematisch eine herkömmliche Vorrichtung zum Strangpressen von Kunststoffschmelzen zu Hohlkammerprofilen dargestellt. Mit dieser Vorrichtung kann z.B. ein Hohlkammerprofil 1 der in Fig. 2a dargestellten Querschnittsform mit Aussenwänden 2 und Innenstegen 3 hergestellt werden. Die Vorrichtung umfaßt ein Profilwerkzeug 4 (Düse), das an einem (nicht dargestellten) Extruder, z.B. einem Schneckenextruder angeordnet ist, von dem aus eine Kunststoffschmelze 5 durch das Werkzeug 4 mit einem gewöhnlich einstellbaren Strangpreß- oder Extrusionsdruck hindurchgepreßt wird. Das Profilwerkzeug 4 weist in seiner relativ großräumigen, rechteckigen Austrittsöffnung, welche die Außenkontur des Hohlkammerprofils 1 bestimmt, einen Profildorn 6 auf, der drei Finger 7 (Fig. 2) umfaßt, welche ihrerseits die Innenkontur des Hohlkammerprofils 1, also insbesondere die drei nebeneinander liegenden Hohlräume 8, bestimmen. Das Profilwerkzeug 4 ist außen von einer Heizeinrichtung 9 umschlossen. Die erhitzte, plastifizierte Kunststoffschmelze 5 durchströmt das Werkzeug 4 in Richtung des Pfeiles A.

An der Austrittsseite des Profilwerkzeugs 4 ist unter Ausbildung eines räumlichen Abstandes eine Kalibrier- und Kühleinheit 11 angeordnet, in welche die zum Hohlkammerprofil 1 geformte Kunststoffschmelze 5 eintritt, um dort kalibriert und gekühlt zu werden. Die Kalibrierung erfolgt mit Hilfe einer nur schematisch angedeuteten Vakuumeinrichtung 12, mit deren Hilfe die Außenwände 2 des Profils 1 an den Innenwänden der als "Gleitform" wirkenden Kalibrier- und Kühleinheit 11 gehalten werden, während das Profil 1 durch die Einheit 11 vorgeschoben wird. Mit Hilfe einer in Fig. 1 ebenfalls nur schematisch angedeuteten Kühleinrichtung 13 erfolgt die Kühlung des Hohlkammerprofils 1 in der Kalibrier- und Kühleinheit auf etwa Raumtemperatur.

Durch eine Abzugseinrichtung 14, die in Fließrichtung (Pfeil A) hinter der Kalibrier- und Kühleinheit 11 angeordnet ist, wird das fertige Hohlkammerprofil 1 abgezogen.

Im Zwischenraum zwischen dem Profilwerkzeug 4 und der Kalibrier- und Kühleinheit 11 herrschen im wesentlichen Raumtemperatur und Atmosphärendruck. Sobald die Kunststoffschmelze 5 das Profilwerkzeug 4 verlassen hat, wird sie "drucklos", so daß das Hohlkammerprofil 1 den Zwischenraum zwischen Profilwerkzeug 4 und Kalibrier- und Kühleinheit 11 ohne Druck durchläuft. Des weiteren erfolgt auch die Kalibrierung und Kühlung in der Einheit 11 unter Vakuum ohne Druck.

Der Profildorn 6 reicht im wesentlichen genau bis zur Austrittsöffnung des Profilwerkzeugs 4, aus welcher die zum Hohlkammerprofil 1 geformte Kunststoffschmelze 5 austritt. Wie dargestellt, sind in den Fingern 7 des Dornes 6 Leitungen 15 ausgebildet, über welche Luft, gegebenenfalls Druckluft, in die Hohlkammern 8 des Hohlkammerprofils 1 eingeführt werden kann.

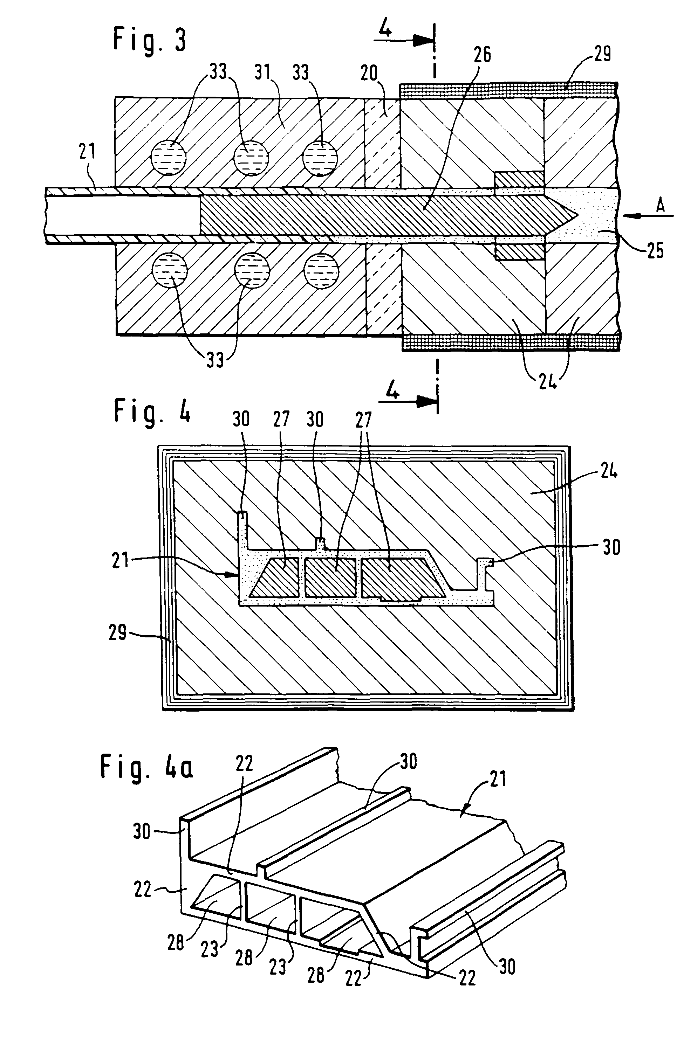

Die Fig. 3 und 4 zeigen die grundsätzliche Ausbildung einer Vorrichtung gemäß der Erfindung zum Strangpressen von Kunststoffschmelzen zu Hohlkammerprofilen. Ein typisches, mit der Vorrichtung gemäß Fig. 3 und 4 hergestelltes Hohlkammerprofil 21 ist in Fig. 4a dargestellt. Es umfaßt Aussenwände 22 und Innenstege 23, die gemeinsam mit den Aussenwänden 22 drei durchgehende Hohlkammern 28 umschließen, wobei die Innenstege 23 dünner als die Außenwände 22 ausgebildet sind. Außerdem weist das Profil 21 außen liegende Stege 30 auf, deren Querschnittsform aus Fig. 4a ersichtlich ist.

Wie aus Fig. 3 und 4 hervorgeht, umfaßt die Vorrichtung ein Profilwerkzeug 24, in dem eine Kunststoffschmelze 25 unter Strangpreßdruck zum Hohlkammerprofil 21 geformt wird. Das Profilwerkzeug 24 ist wiederum an einem herkömmlichen Extruder angeordnet. Das Werkzeug 24 enthält in einem Hohlraum, dessen Innenwände die Außenkontur des Hohlkammerprofils 21 bestimmen, einen Profildorn 26 mit drei in gegenseitigen Abständen angeordneten, gleich langen Fingern 27 (Fig. 4). Die Finger 27 bestimmen die Innenkontur des Hohlkammerprofils 21, wobei sich in den Zwischenräumen zwischen den Fingern 27 die Stege 23 des Profils 21 ausbilden. Der aus den Fingern 27 bestehende Dorn 26 ist im Profilwerkzeug 24 fest verankert. Die Kunststoffschmelze 25 kann ungeschäumte oder nichtschäumende thermoplastische, duroplastische oder elastomere Kunststoffe umfassen, z.B. Polyamide, Polypropylen, Polyester; Phenolharz, Kunststoffe auf Epoxidharzbasis; Polyurethan. Der Strangpreßdruck ist immer höher als 1 bar, z.B. zwischen 2 und mehreren Hundert bar, vorzugsweise 20 bis 200 bar, insbesondere 30-100 bar. Er hängt vom verwendeten Kunststoff, von den hergestellten Wanddicken des Profils und von Faserverstärkungen und anderen Füllstoffen im Kunststoff ab. Insbesondere bei Faserverstärkungen (z.B. Glas- oder Kohlenstoffasern) werden hohe Drücke, z.B. 200 bar, eingesetzt.

Unter Zwischenschaltung einer Wärmedämmplatte 20, die gegebenenfalls auch entfallen kann, ist unmittelbar an das Profilwerkzeug 24 eine Kalibrier- und Kühleinheit 31 angeschlossen und fest mit dem Werkzeug 24 zu einem in sich geschlossenen System verbunden. Die eigentliche Ausbildung der Kalibrier- und Kühleinheit 31 kann konventionell sein, also beispielsweise so, wie bei der in Fig. 1 dargestellten Kalibrier- und Kühleinheit 11. In Fig. 3 ist lediglich eine Kühlung durch Leitungen 33 angedeutet, die Kalibrierung kann in nicht dargestellter Weise mit Hilfe von Vakuum erfolgen.

Da die Kalibrier- und Kühleinheit 31 unter Ausbildung eines geschlossenen Systems fest mit dem Profilwerkzeug 24 verbunden ist, pflanzt sich der Strangpreßdruck, unter dem das aus dem Profilwerkzeug 24 extrudierte Hohlkammerprofil 21 steht, in die Kalibrier- und Kühleinheit 31 fort, so daß dort, zumindest in den dem Werkzeug 24 benachbarten Bereich der Einheit 31 und der Platte 20, im wesentlichen der gleiche Druck herrscht und die Kunststoffschmelze in dieser Einheit 31 unter diesem Druck kalibriert und zur Ausformung gebracht wird. Dies ist ein erster wesentlicher Unterschied zu der in Fig. 1 gezeigten herkömmlichen Vorrichtung, bei welcher die Ausformung der Kunststoffschmelze in der Kalibrier- und Kühleinheit drucklos erfolgt. Es hat sich gezeigt, daß durch das unter Druck erfolgende Erstarren der das Hohlkammerprofil 21 bildenden Kunststoffschmelze 25 in der Kalibrier- und Kühleinheit 31 eine wesentlich größere Formtreue und Stabilität dieses Profils erzielbar ist.

Wie weiterhin aus Fig. 3 hervorgeht, erstreckt sich der Profildorn 26 mit seinen Fingern 27 relativ weit in die Kalibrier- und Kühleinheit 31 hinein, so daß sich auch die durch den Dorn 26 und seine Finger 27 bedingte Formgebung des Hohlkammerprofils 21 noch bis in die Kalibrier- und Kühleinheit 31 hinein fortsetzt. Dies ist ein weiterer Grund dafür, daß sich mit der Vorrichtung gemäß Fig. 3 und 4 wesentlich komplexere, unsymmetrische Profilquerschnitte, deren Profilachse beispielsweise auch außerhalb der Schneckenachse eines Extruders liegen kann, präzise und ohne Einfallstellen und Vakuolen mit sehr engen Maßstababweichungen herstellen lassen, wie dies bisher nicht möglich war. Bei den herkömmlichen Hohlkammerprofilen bestand beispielsweise die Schwierigkeit, nachträglich Einschübe, z.B. Holzleisten, in die eine oder andere Hohlkammer 8 (Fig. 2a) einzuführen, weil in diesen Hohlkammern erhebliche Maßabweichungen auftraten. Hohlkammerprofile 21, die mit der Vorrichtung gemäß Fig. 3 und 4 hergestellt werden, haben Hohlkammern 28 mit überall genauen Soll-Abmessungen, so daß dort Einschübe ohne Schwierigkeit positioniert werden können. Das Profilwerkzeug 24 selbst ist wiederum von einer Heizeinrichtung 29 umschlossen, die der Heizeinrichtung 9 in Fig. 1 und 2 entspricht.

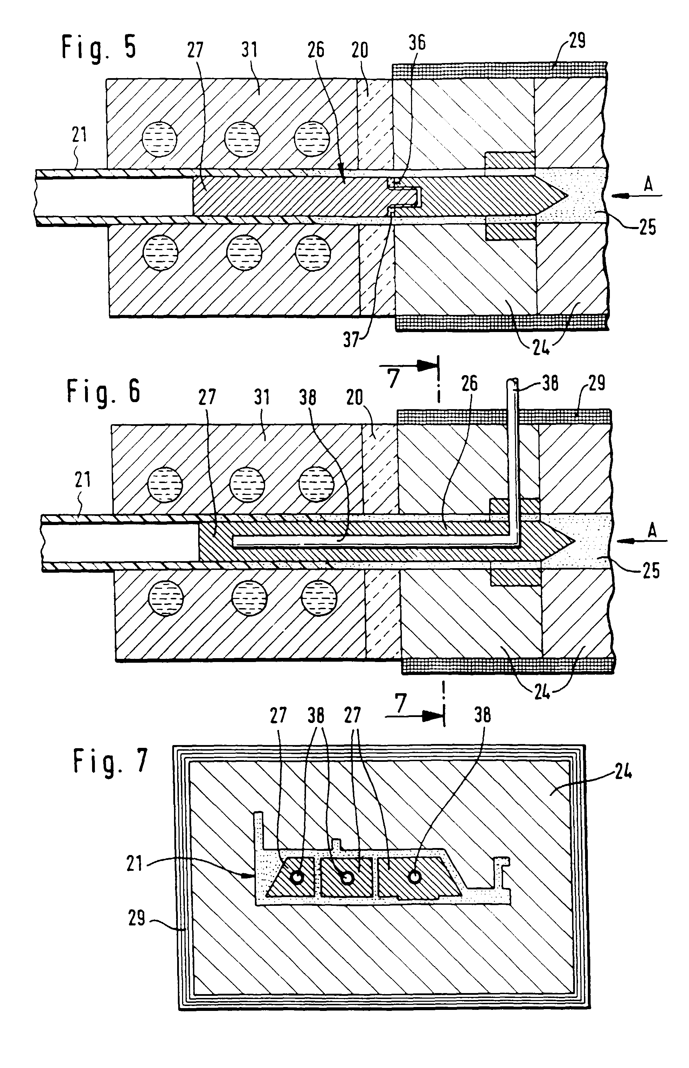

Die Vorrichtung nach Fig. 5 unterscheidet sich von derjenigen nach Fig. 3 und 4 lediglich dadurch, daß der Profildorn 26 mit seinen Fingern 27 nicht einstückig ausgebildet ist, sondern aus mehreren Teilen besteht. Man erkennt in Fig. 5 eine Trennstelle 36, an welcher die in der Kalibrier- und Kühleinheit 31 gelegenen Teile der Finger 27 mit dem Teil des Dornes 26, z.B. durch Verschraubung, verbunden werden können, der im eigentlichen Profilwerkzeug 24 angeordnet ist. Bei der Verbindung dieser Dornteile können Wärmedämmelemente 37 zwischen die einzelnen Teile eingebracht werden.

Die in Fig. 6 und 7 dargestellte Vorrichtung entspricht wiederum weitgehend der Vorrichtung gemäß Fig. 3. In Fig. 6 und 7 sind im Gegensatz zu Fig. 3 jedoch der Dorn 26 und seine Finger 27 nicht massiv ausgebildet, sondern sie enthalten (in Fig. 6 und 7 lediglich schematisch angedeutete) Heiz- oder Kühlleitungen 38, über welche mit Hilfe eines geeigneten Mediums der Dorn 26 mit seinen Fingern 27 in gezielter Weise temperiert, d.h. gekühlt oder erwärmt, werden kann.

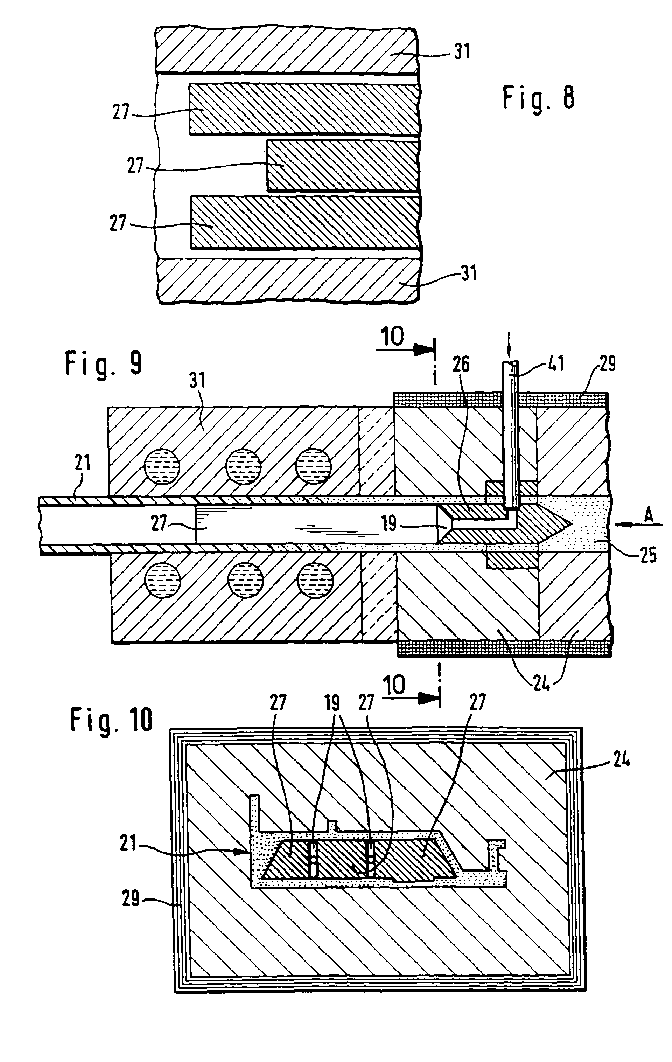

Die Fig. 8 zeigt schematisch in einer Schnittansicht der Kalibrier- und Kühleinheit 31 (senkrecht zu der Schnittansicht gemäß Fig. 4 und 7) einen Dorn, dessen Finger 27 im Bereich der Einheit 31 unterschiedliche Länge haben. Hierdurch können unterschiedliche Profilwanddicken, aber auch Extrusionsdrücke und Kühlleistungen in gezielter Weise erzeugt werden, wodurch wiederum die Genauigkeit des erzeugten Hohlkammerprofils 21 erhöht wird.

Bei der in Fig. 9 und 10 gezeigten, wiederum abgewandelten Ausführungsform einer Strangpreßvorrichtung gemäß der Erfindung kann über eine Hilfsleitung 41, die außerhalb des Profilwerkzeuges 24 mit einem Beistell- oder Hilfsextruder verbunden ist, eine zusätzliche Kunststoffschmelze unter Druck eingeleitet werden, aus der bestimmte Teile des Profils 21 gebildet werden, wobei der Druck dieser Zusatzschmelze von demjenigen der den Hauptstrang bildenden Kunststoffschmelze 25 verschieden sein kann. Wie in Fig. 9 und 10 schematisch dargestellt, ist der Ausgang 19 der Hilfsleitungen 41 jeweils so ausgebildet und angeordnet, daß die dort austretende zusätzliche Kunststoffschmelze die Zwischenwände oder Stege 23 des Hohlkammerprofils 21 bildet. In analoger Weise könnten auch andere Bereiche des Hohlkammerprofils 21 aus einer zusätzlichen Kunststoffschmelze oder auch aus einer Kombination dieser zusätzlichen Kunststoffschmelze mit der als Hauptstrang zugeführten Kunststoffschmelze 25 gebildet werden.

Auch ist es möglich, im Bereich des Dornes 26 und seiner Finger 27 im Strömungsweg der Kunststoffschmelze stationäre Strömungshindernisse anzubringen, die eine gezielte Anisotropie des erhärteten, insbesondere mit Zuschlagstoffen, z.B. Glasfasern, gefüllten Kunststoffes ergeben, wodurch sich ebenfalls bestimmte Funktionseigenschaften des Hohlkammerprofils 21 einsteuern lassen.

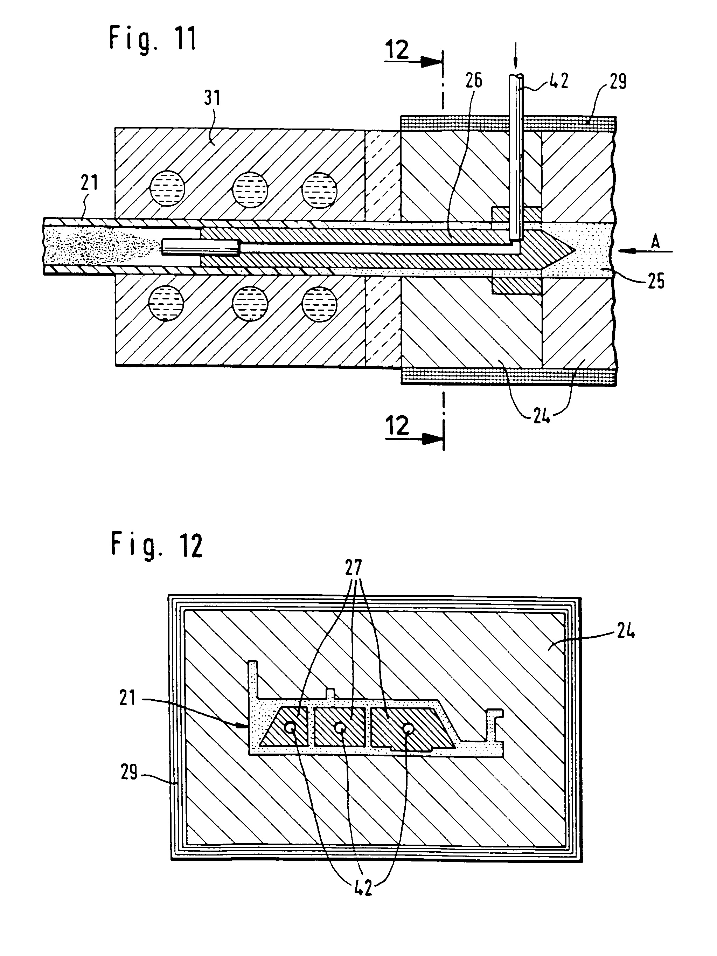

Die Fig. 11 und 12 zeigen eine Strangpreßvorrichtung 24, bei der im Gegensatz zu Fig. 9 und 10 Hilfsleitungen 42 nicht zwischen den Fingern 27 des Profildorns 26, sondern in den Fingern 27 selbst angeordnet sind. Hierdurch ist es möglich, bestimmte Zusatzkomponenten, insbesondere auch schäumbare Kunststoffkomponenten, in die Hohlkammern 28 des Hohlkammerprofils 21 einzubringen, und zwar je nach Länge der Leitung 42, die, wie in Fig. 11 dargestellt, auch die vordere Stirnseite des Dorns 26 überragen kann, in das allmählich erstarrende oder bereits erstarrte Hohlkammerprofil 21 und im gleichen Arbeitsgang mit dem eigentlichen Strangpreßprozeß. Die als Füllstoff dienende Zusatzkomponente braucht nicht in alle Hohlkammern 28 des Hohlkammerprofils 21 eingefüllt zu werden. In bestimmten Fällen mag es genügen, nur eine einzige Hohlkammer 28 mit einer solchen Zusatzkomponente, z.B. einem schäumbaren Kunststoff, zu füllen.

Wird eine schäumbare Komponente verwendet, so können die beim Schäumen auftretenden Schaumauftriebskräfte gezielt zur Ausformung und Auskalibrierung der Hohlkammern 28 des Hohlkammerprofils 21 mitausgenutzt werden.

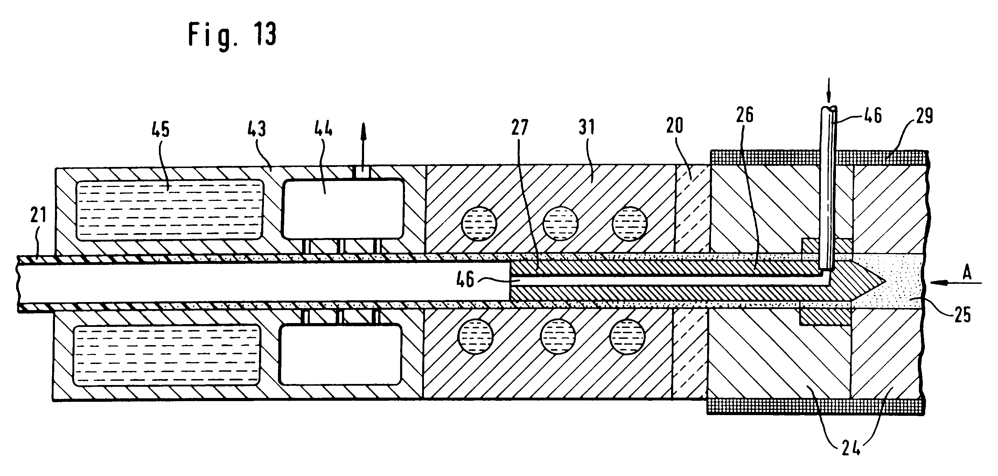

Bei der in Fig. 13 schließlich dargestellten Strangpreßvorrichtung, die im wesentlichen wiederum der Ausführungsform gemäß Fig. 3 entspricht, ist hinter eine erste Kalibrier- und Kühleinrichtung 31 noch eine zweite solche Einheit 43 geschaltet, die ähnlich Fig. 1 eine Vakuumeinrichtung 44 sowie eine Kühleinrichtung 45 umfaßt und ebenfalls vom Hohlkammerprofil 21 durchlaufen wird.

Wie weiterhin aus Fig. 13 hervorgeht, sind die einzelnen Finger 27 des Dornes 26, ähnlich wie in Fig. 1, von Leitungen 46 durchdrungen, die ebenso wie im Fall der Fig. 1 der Einleitung von Druckluft dienen. Hierdurch kann die Auskalibrierung des Hohlkammerprofils 21 von innen her begünstigt werden. Außerdem kann die Druckluft auch die Kühlung des Hohlkammerprofils 21 unterstützen.

Es ist möglich, auf die hier beschriebene Art und Weise mehrere Hohlkammerprofile 21 gleichzeitig nebeneinander herzustellen, indem mehrere Vorrichtungen, bestehend aus Profilwerkzeug 24, Profildorn 26 sowie Kalibrier- und Kühleinheit 31, nebeneinander angeordnet werden oder eine einzige Vorrichtung dieser Art mit mehreren Austrittsöffnungen für Hohlkammerprofile 21 versehen wird.

Bei den bisher beschriebenen Ausführungsformen ist der Dorn als besonderes Teil ausgebildet und in das Profilwerkzeug 24 sowie die Kalibrier- und Kühleinheit 31 eingesetzt. Der Dorn 26 könnte jedoch auch einstückig aus dem Werkzeug 24 herausgeformt werden, und zwar insbesondere dann, wenn es sich um relative unkomplizierte Hohlkammerprofile handelt. Der Dorn kann auch, ebenso wie Profilwerkzeug 24 und Kalibrier- und Kühleinheit 31 durch die Wärmedämmplatte 20, mittels eines entsprechenden Wärmedämmeinsatzes thermisch vom Profilwerkzeug 24 getrennt werden. Das gleiche Ergebnis ließe sich auch mit verkleinerten Anlageflächen zwischen Dorn 26 und Werkzeug 24 erzielen. Solche verkleinerten Anlageflächen können auch zwischen Profilwerkzeug 24 und Kalibrier- und Kühleinheit 31 ausgebildet werden, um den Wärmeübergang zu reduzieren. Auch kann der Dorn 26 mit seinen Fingern 27 in Extrusionsrichtung A verschieblich und arretierbar ausgebildet werden.

## Patentansprüche

1. Verfahren zum Strangpressen von Kunststoffschmelzen (25) zu Hohlkammerprofilen (21) unter Hindurchpressen der Kunststoffschmelze durch ein beheiztes Profilwerkzeug (24) mit innerem Profildorn (26), wobei Profilwerkzeug und Profildorn die Außen- und Innenkonturen des Hohlkammerprofils bestimmen, und unter anschließender Kalibrierung und Abkühlung des aus dem Profilwerkzeug austretenden Hohlkammerprofilstranges in einer Kalibrier- und Kühleinheit (31), **dadurch gekennzeichnet**, daß ein Hohlkammerprofil mit axial durchgehenden Hohlkammern (28) stranggepreßt und die Kalibrierung und Abkühlung des Hohlkammerprofilstranges in der Kalibrier- und Kühleinheit unter Aufrechterhaltung des Preßdruckes vorgenommen wird.

2. Verfahren nach Anspruch 1, dadurch gekennzeichnet, daß im Bereich des Profildorns (26) unter Druck zusätzliche Kunststoffschmelze eingeleitet wird.

3. Verfahren nach Anspruch 1, dadurch gekennzeichnet, daß im Bereich des Profildorns (26) eine Zusatzkomponente, insbesondere eine schäumbare Komponente, als Füllstoff in die Hohlkammer(n) des Hohlkammerprofils eingeleitet wird.

4. Verfahren nach Anspruch 1, dadurch gekennzeichnet, daß im Bereich des Profildorns (26) Druckluft in die Hohlkammer(n) des Hohlkammerprofils eingeleitet wird.

5. Verfahren nach einem der Ansprüche 1 bis 4, dadurch gekennzeichnet, daß das Hohlkammerprofil mit unterschiedlichen Außenwand- und Innenstegdicken stranggepreßt wird.

6. Vorrichtung zur Durchführung des Verfahrens nach einem der Ansprüche 1 bis 5 mit einem Profilwerkzeug (24), das einen inneren Profildorn (26) enthält, und mit einer Kalibrier- und Kühleinheit (31), dadurch gekennzeichnet, daß das den Profildorn (26) enthaltende Profilwerkzeug (24) mit der Kalibrier- und Kühleinheit (31) zu einem geschlossenen System fest verbunden ist, so daß sich der im Profilwerkzeug herrschende Strangpreßdruck in die Kalibier- und Kühleinheit hinein fortpflanzt, und daß der Profildorn (26) des Profilwerkzeuges (24) in die Kalibrier- und Kühleinheit (31) hineinragt.

7. Vorrichtung nach Anspruch 6, dadurch gekennzeichnet, daß zwischen Profilwerkzeug (24) und Kalibrier- und Kühleinheit (31) eine Wärmedämmplatte (20) oder verkleinerte Anlageflächen angeordnet sind.

8. Vorrichtung nach Anspruch 6, dadurch gekennzeichnet, daß der Profildorn (26) aus mehreren Teilen zusammengesetzt ist.

9. Vorrichtung nach Anspruch 6, dadurch gekennzeichnet, daß der Profildorn (26) temperierbar ist.

10. Vorrichtung nach Anspruch 6, dadurch gekennzeichnet, daß der Profildorn (26) mehrere Finger (27) unterschiedlicher Länge umfaßt.

11. Vorrichtung nach Anspruch 6, dadurch gekennzeichnet, daß im Bereich des Profildorns (26) über eine Hilfsleitung (41) unter Druck zusätzliche Kunststoffschmelze einleitbar ist.

12. Vorrichtung nach Anspruch 6, dadurch gekennzeichnet, daß im Profildorn (26) eine Leitung (42) zum Einbringen von Zusatzkomponenten, insbesondere einer schäumbaren Komponente, in die Hohlkammer(n) (28) des Hohlkammerprofils (21) ausgebildet ist.

13. Vorrichtung nach Anspruch 6, dadurch gekennzeichnet, daß im Profildorn (26) eine Leitung (46) zum Einbringen von Druckluft in die Hohlkammer(n) (28) des Hohlkammerprofils (21) ausgebildet ist.

14. Vorrichtung nach Anspruch 6, dadurch gekennzeichnet, daß der Profildorn (26) in Strangpreßrichtung (A) verschieblich und arretierbar ist.

## Claims

1. Process for extruding polymer melts (25) to form hollow chamber sections (21) by pressing the polymer melt through a heated shaping tool (24) with an internal shaping mandrel (26), with shaping tool and shaping mandrel determining the outer and inner contours of the hollow chamber section, and by subsequently sizing and cooling the hollow chamber section strand exiting from the shaping tool in a sizing and cooling unit (31), characterized in that a hollow chamber section with axially continuous hollow chambers (28) is extruded and the sizing and cooling of the hollow chamber section strand is carried out in the sizing and cooling unit whilst maintaining the extrusion pressure.

2. Process as defined in claim 1, characterized in that additional polymer melt is introduced under pressure in the region of the shaping mandrel (26).

3. Process as defined in claim 1, characterized in that an additional component, in particular a foamable component, is introduced into the hollow chamber(s) of the hollow chamber section as filler in the region of the shaping mandrel (26).

4. Process as defined in claim 1, characterized in that compressed air is introduced into the hollow chamber(s) of the hollow chamber section in the region of the shaping mandrel (26).

5. Process as defined in any one of claims 1 to 4, characterized in that the hollow chamber section is extruded with different outer wall and inner web thicknesses.

6. Device for carrying out the process as defined in any one of claims 1 to 5, comprising a shaping tool (24) containing an interior shaping mandrel (26), and a sizing and cooling unit (31), characterized in that the shaping tool (24) containing the shaping mandrel (26) is rigidly connected to the sizing and cooling unit (31) to form a closed system so that the strand extrusion pressure prevailing in the shaping tool is propagated into the sizing and cooling unit, and that the shaping mandrel (26) of the shaping tool (24) protrudes into the sizing and cooling unit (31).

7. Device as defined in claim 6, characterized in that an insulating board (20) or contact surfaces reduced in size are arranged between shaping tool (24) and sizing and cooling unit (31).

8. Device as defined in claim 6, characterized in that the shaping mandrel (26) is composed of several parts.

9. Device as defined in claim 6, characterized in that the shaping mandrel (26) is adapted to be attemperated.

10. Device as defined in claim 6, characterized in that the shaping mandrel (26) comprises several fingers (27) of different lengths.

11. Device as defined in claim 6, characterized in that additional polymer melt is introducible under pressure in the region of the shaping mandrel (26) via an auxiliary line (41).

12. Device as defined in claim 6, characterized in that a line (42) is formed in the shaping mandrel (26) for introducing additional components, in particular a foamable component, into the hollow chamber(s) (28) of the hollow chamber section (21).

13. Device as defined in claim 6, characterized in that a line (46) is formed in the shaping mandrel (26) for introducing compressed air into the hollow chamber(s) (28) of the hollow chamber section (21).

14. Device as defined in claim 6, characterized in that the shaping mandrel (26) is adapted to be displaced and stopped in extrusion direction (A).

## Revendications

1. Procédé pour extruder des matières plastiques en fusion (25) pour former des profilés creux à chambres (21), comportant l'extrusion de la matière plastique fondue à travers un outil de profil chauffé (24) muni d'un mandrin de profil (26), l'outil de profil et le mandrin de profil déterminant les contours extérieur et intérieur du profilé creux à chambres, et comportant un calibrage et un refroidissement ultérieurs de l'extrudé de profilé creux à chambres qui sort de l'outil de profil dans une unité de calibrage et de refroidissement (31), caractérisé en ce qu'un profilé creux à chambres possédant des chambres (28) continues dans la direction axiale est extrudé, et que le calibrage et le refroidissement de l'extrudé de profilé creux à chambres sont exécutés dans l'unité de calibrage et de refroidissement avec un maintien de la pression d'extrusion.

2. Procédé selon la revendication 1, caractérisé en ce qu'un supplément de matière plastique en fusion est introduit sous pression dans la région du mandrin de profil (26).

3. Procédé selon la revendication 1, caractérisé en ce qu'un constituant additionnel, en particulier un constituant pouvant gonfler en mousse, est introduit, en tant que matière de remplissage, dans la ou les chambre(s) du profilé creux à chambres, dans la région du mandrin de profil (26) .

4. Procédé selon la revendication 1, caractérisé en ce que de l'air comprimé est introduit dans la ou les chambre(s) du profilé creux à chambres, dans la région du mandrin de profil (26).

5. Procédé selon une des revendications 1 à 4, caractérisé en ce que le profilé creux à chambres est extrudé avec des épaisseurs différentes pour la paroi extérieure et pour les cloisons intérieures.

6. Dispositif pour la mise en oeuvre du procédé selon une des revendications 1 à 5, comprenant un outil de profil (24) qui renferme un mandrin de profil intérieur (26), et une unité de calibrage et de refroidissement (31), caractérisé en ce que l'outil de profil (24) qui renferme le mandrin de profil (26) est assemblé rigidement à l'unité de calibrage et de refroidissement (31) pour former un système fermé, de sorte que la pression d'extrusion qui règne dans l'outil de profil se propage jusque dans l'unité de calibrage et de refroidissement, et en ce que le mandrin de profil (26) de l'outil de profil (24) fait saillie dans l'unité de calibrage et de refroidissement (31).

7. Dispositif selon la revendication 6, caractérisé en ce qu'une plaque d'isolation thermique (20) ou des surfaces de contact rétrécies est ou sont disposées entre l'outil de profil (24) et l'unité de calibrage et de refroidissement (31).

8. Dispositif selon la revendication 6, caractérisé en ce que le mandrin de profil (26) est composé de plusieurs parties.

9. Dispositif selon la revendication 6, caractérisé en ce que le mandrin de profil (26) peut être mis en équilibre de température.

10. Dispositif selon la revendication 6, caractérisé en ce que le mandrin de profil (26) comprend plusieurs doigts (27) de différentes longueurs.

11. Dispositif selon la revendication 6, caractérisé en ce qu'un supplément de matière plastique en fusion peut être introduit sous pression dans la région du mandrin de profil (26) au moyen d'une conduite auxiliaire (41).

12. Dispositif selon la revendication 6, caractérisé en ce qu'une conduite (42), destinée à introduire des constituants additionnels, en particulier un constituant pouvant gonfler en mousse, dans la ou les chambre(s) (28) du profilé creux (21) à chambres, est formée dans le mandrin de profil (26).

13. Dispositif selon la revendication 6, caractérisé en ce qu'une conduite (46), destinée à introduire de l'air comprimé dans les chambres (28) du profilé creux (21) à chambres, est formée dans le mandrin de profil (26).

14. Dispositif selon la revendication 6, caractérisé en ce que le mandrin de profil (26) peut être déplacé en translation dans la direction de l'extrusion (A) et immobilisé.
